# EUROPÄISCHE PATENTSCHRIFT

(11) **EP 3 151 937 B1**
(45) Veröffentlichungstag und Bekanntmachung des Hinweises auf die Patenterteilung: **08.08.2018**
(21) Anmeldenummer: 14732104.6
(22) Anmeldetag: 04.06.2014
(51) Int. Cl.: G01M 9/04, A63G 31/00

(54) **LUFTUMLENKEINRICHTUNG**
AIR DEVIATING DEVICE
DISPOSITIF DÉFLECTEUR D'AIR

(43) Veröffentlichungstag der Anmeldung: 12.04.2017
(73) Patentinhaber: Indoor Skydiving Germany GmbH, 45966 Gladbeck (DE)
(72) Erfinder: NEBE, Boris, 46236 Bottrop (DE); DOHR, Manuel, 42781 Haan (DE)
(74) Vertreter: Zech, Stefan Markus
(86) Internationale Anmeldenummer: PCT/EP2014/061593
(87) Internationale Veröffentlichungsnummer: WO 2015/185124

(56) Entgegenhaltungen:
- WO-A1-2011/044860
- WO-A1-2011/088426
- DE-A1-102005 037 708
- DE-A1-102008 046 759

## Beschreibung

Die vorliegende Erfindung betrifft eine Luftumlenkeinrichtung ausgebildet und bestimmt zum Einbau in einen Freifallsimulator mit in sich geschlossenem Luftkreislauf. Die Erfindung betrifft außerdem einen Freifall-Simulator mit in sich geschlossenem Luftkreislauf und ein Verfahren zum Trocknen, Kühlen und/oder Erwärmen eines Luftstroms in einem Freifall-Simulator mit in sich geschlossenem Luftkreislauf.

Bei einem Freifall-Simulator mit in sich geschlossenem Luftkreislauf handelt es sich um eine Einrichtung, die ausgelegt ist, um eine Person in einem - in der Regel steuerbaren - vertikal aufsteigenden Luftstrom, der durch eine Schwebekammer hindurchströmt, in einer Schwebeposition zu halten. Der Luftstrom wird über einen Luftführungskanal nach seinem Austritt aus einer oberen Öffnung der Schwebekammer zu einer unteren Öffnung der Schwebekammer zurückgeführt, so dass ein in sich geschlossener Kreislauf gebildet wird.

Ein typischer Effekt dieser so genannten geschlossenen Freifall-Simulatoren besteht darin, dass aufgrund von Druckverlusten die Luft innerhalb des Simulators erwärmt wird, was verschiedene Probleme mit sich bringt. Zum einen kann die Überhitzung der Luft von den den Simulator nutzenden Personen als unangenehm empfunden werden bzw. bei starker Überhitzung auch zu gesundheitlichen Schäden führen, zum anderen führt die Erwärmung der Luft zu einer Abnahme der Luftdichte, was wiederum die Kraft, die die schwebende Person im Gleichgewicht hält, herabsetzt. Insgesamt ist wegen der Kombination von oftmals nebeneinander angeordneten Gebläsen und bedarfsweise öffenbaren Belüftungen ein erhöhter Steuerungsaufwand vonnöten.

Um einen geschlossenen Luftkreislauf sicherzustellen, wird typischerweise ein Luftführungskanal vorgesehen, bei dem in geraden Abschnitten, vorzugsweise in einem vertikalen Rückführungskanal, mindestens ein Gebläse angeordnet ist und in Ecken des Luftführungskanals Luftumlenkvorrichtungen vorgesehen sind. Insbesondere können dabei Umlenklamellen vorgesehen sein.

Im Stand der Technik ist vorgeschlagen worden, die Umlenklamellen so auszubilden, dass diese auch einen Wärmeaustausch, insbesondere eine Abkühlung der umgelenkten Luft bewirken. Es hat sich allerdings herausgestellt, dass es sehr aufwändig sein kann, die als Wärmetauscher ausgebildeten Lamellen im Eckbereich des Luftführungskanals anzuordnen und in zuverlässiger Weise mit einem Kühlfluid zu versorgen. Ein Beispiel für eine derartige Anordnung nach dem Stand der Technik ist durch die WO 2011/088426 A1 gegeben.

Der Erfindung liegt die Aufgabe zu Grunde, eine Luftumlenkeinrichtung zur Anordnung innerhalb eines Luftführungskanals und einen Freifall-Simulator mit in sich geschlossenem Luftkreislauf anzugeben, wobei der Installationsaufwand reduziert ist und die Temperatur im Luftführungskanal wirkungsvoll reduziert wird. Diese Aufgabe wird durch eine Luftumlenkeinrichtung nach Patentanspruch 1 und einen Freifall-Simulator nach Patentanspruch 9 gelöst.

Die Aufgabe wird nach einem ersten Aspekt insbesondere gelöst durch eine Luftumlenkeinrichtung ausgebildet und bestimmt zum Einbau in einen Freifallsimulator mit in sich geschlossenem Luftkreislauf, mit der ein Luftstrom um einen Winkel von 60° bis 120°, vorzugsweise um etwa 90°, umgelenkt wird, wobei die Luftumlenkeinrichtung mehrere Segmente umfasst, wobei jedes Segment umfasst:
- eine Vielzahl von ein Umlenkprofil zur Umlenkung des Luftstroms ausbildenden Lamellen mit zumindest einem Hohlraum zur Durchleitung eines Fluids,
- ein für alle Lamellen des Segments gemeinsames Einlassrohr zum Zuführen des Fluids in die Lamellen und
- ein für alle Lamellen des Segments gemeinsames Auslassrohr zum Abführen Fluids aus den Lamellen,
wobei die Segmente in Richtung der Fluiddurchleitung nebeneinander befestigt sind derart, dass die Segmente in Parallelanordnung zueinander von Fluid durchströmbar sind.

Gemäß einem zweiten Aspekt der Erfindung wird die oben genannte Aufgabe gelöst durch einen Freifall-Simulator mit in sich geschlossenem Luftkreislauf, wobei der Freifall-Simulator umfasst:
- eine Schwebekammer, in welcher Personen infolge eines vertikal aufwärts gerichteten Luftstromes schweben können,
- einen im Wesentlichen geschlossenen Luftführungskanal mit mindestens einem Gebläse,
- eine im Luftführungskanal, insbesondere in einer Ecke des Luftführungskanals angeordnete Luftumlenkeinrichtung gemäß einem der Ansprüche 1 bis 8.

Es wird auch ein Verfahren zum Trocknen, Kühlen und/oder Erwärmen eines Luftstroms in einem Freifallsimulator mit in sich geschlossenem Luftstrom, insbesondere mittels einer Luftumlenkeinrichtung nach einem der Ansprüche 1 bis 9, offenbart, mit den Schritten:
- Aufwärmen oder Abkühlen eines Fluids,
- Zuführen des Fluids durch ein Einlassrohr,
- Durchleiten des Fluids durch eine Vielzahl von Lamellen,
- Abführen des Fluids durch ein Auslassrohr, und
- Umströmen der Lamellen mit dem Luftstrom
wobei die Lamellen in einer Vielzahl von Segmenten angeordnet sind und die Segmente in Richtung der Fluiddurchleitung nebeneinander angeordnet sind.

Erfindungsgemäß kann also vorgesehen sein, dass das Fluid innerhalb der Vielzahl von Lamellen quer zur Strömungsrichtung der Luft im Luftführungskanal fließt und dabei Wärme zwischen Fluid und strömender Luft ausgetauscht wird. Bei Zuführen von kühlem Fluid kommt es dabei über die Längserstreckung der Lamelle zu einer Erwärmung des Fluids. Dadurch, dass erfindungsgemäß in Richtung der Fluiddurchleitung vorzugsweise mehrere Segmente nebeneinander befestigt sind, wobei jedes Segment eine Vielzahl von Lamellen und ein eigenes Einlassrohr zum Zuführen von (kühlem) Fluid aufweist, wird also über den Querschnitt des Luftführungskanals mehrmals kühles Fluid zugeführt und somit ein besserer Kühlungseffekt erzielt als wenn sich die einzelnen Lamellen ganz über den Querschnitt des Luftführungskanals erstrecken und somit nur an einer Seite kühles Fluid zugeführt wird. Darüber hinaus können die Lamellen dünnwandiger ausgebildet werden, was die Wärmeübertragung und damit die Kühlwirkung weiter erhöht.

Vorzugsweise durchströmt das Fluid die Lamellen eines Segments in immer der gleichen Richtung, also z.B. immer von der linken Seite des Segments zur rechten Seite oder umgekehrt. Somit kann in besonders einfacher Weise das Fluid auf einer Seite des Segments zugeführt und auf der anderen Seite des Segments abgeführt werden.

Bei dem Fluid kann es sich um eine Flüssigkeit, z.B. um Leitungswasser, destilliertes Wasser, entsalztes Wasser und/oder mit antibakteriellen Mitteln versehenes Wasser handeln. Ebenso kann es sich bei der Flüssigkeit um Kühlmittel handeln.

Die Luftumlenkeinrichtung kann auch zur Kondensationstrocknung des Luftstroms eingesetzt werden. Hierzu wird ein besonders kaltes Fluid durch die Lamellen geleitet, so dass sich an der Oberfläche der Lamellen Kondenswasser bildet. Das Kondenswasser wird abgeführt und somit dem Luftstrom Feuchtigkeit entzogen. Die Abführung des Kondenswasser kann z.B. dadurch erfolgen, dass unterhalb der Lamellen ein Auffangbecken angeordnet ist. Das Auffangbecken kann dabei auch in Richtung der Luftströmungsrichtung nach hinten versetzt angeordnet sein, da das abtropfende Kondensat durch den Luftstrom verweht wird.

Im Vergleich zur Adsorptionstrocknung lässt sich somit eine einfache und kostengünstige Lufttrocknung erzielen.

Das Umlenkprofil zur Umlenkung des Luftstroms kann dadurch gebildet sein, dass jede Lamelle ein Profil aufweist, das zur Umlenkung des Luftstroms geeignet ist, z.B. durch eine Krümmung der Lamellen. Alternativ kann sich die Umlenk-Eigenschaft aber auch dadurch ergeben, dass die Lamellen so zueinander angeordnet sind, dass der Luftstrom umgelenkt wird.

Die mehreren Segmente können jeweils gleich viele Lamellen aufweisen. Die Lamellen der verschiedenen Segmente können dabei so angeordnet sein, dass sie auf denselben Achsen liegen, die erste Lamelle eines Segments also als Fortsetzung der ersten Lamellen der anderen Segmente angeordnet ist und ebenso für die weiteren Lamellen.

Vorzugsweise sind die Lamellen zumindest eines Segments so am Einlassrohr und Auslassrohr befestigt, dass keine weitere Halterung oder Befestigung für die Lamellen erforderlich ist. In diesem Fall kann also vorgesehen sein, dass die Luftumlenkeinrichtung nur aus Lamellen und Einlass- bzw. Auslassrohren besteht. Die erfindungsgemäße Luftumlenkeinrichtung hat den Vorteil, dass sie besonders einfach installiert werden kann.

Die einzelnen Segmente der Luftumlenkeinrichtung können fest aneinander befestigt sein und gemeinsam als Modul installiert werden, oder es kann vorgesehen sein, dass die einzelnen Segmente einzeln installiert werden und erst nach der Installation im Luftführungskanal aneinander befestigt werden.

In einer bevorzugten Ausgestaltung der Erfindung ist vorgesehen, dass die Lamellen eines Segments an dem Einlassrohr und/oder dem Auslassrohr stoffschlüssig, insbesondere durch Verschweißen, vorzugsweise durch Laser-Verschweißen, befestigt sind.

Hierdurch lässt sich eine besonders stabile und zugleich fluid- bzw. flüssigkeitsundurchlässige Befestigung der Lamellen am Einlassrohr und Auslassrohr erreichen. Im Vergleich zu einer Befestigung mit Nieten oder Schrauben sind somit auch keine weiteren Befestigungsmittel erforderlich, die sich im Laufe der Zeit lockern könnten.

In einer weiteren Ausgestaltung der Erfindung ist vorgesehen, dass die Lamellen dazu ausgebildet sind, die Luft umzulenken, insbesondere um einen Winkel von 90°. Hierdurch dient die Luftumlenkeinrichtung sowohl zum Austausch von Wärme als auch zum Umlenken der Luft, z.B. in einer Ecke des Luftführungskanals.

In einer besonders bevorzugten Ausgestaltung der Erfindung ist dabei vorgesehen, dass zumindest eine der Lamellen in Richtung der Luftströmungsrichtung gekrümmt ausgebildet ist, wobei insbesondere auch der Hohlraum der Lamelle in diese Richtung gekrümmt ausgebildet ist. Es versteht sich, dass die Umlenkung der Luft durch verschiedene Arten von Krümmung erzielt werden kann.

In einer weiteren Ausgestaltung der Erfindung ist vorgesehen, dass zumindest eine der Lamellen aus Aluminium, insbesondere aus einem Aluminium-Strangpressprofil gefertigt ist. Aluminium ist leicht, weist einen hohen Wärmeleitungskoeffizienten auf und lässt sich einfach verarbeiten. Es ist somit als Material für die Lamellen besonders geeignet.

In einer weiteren Ausgestaltung der Erfindung ist vorgesehen, dass die Lamellen zumindest eines der Segmente zwischen 0,5m und 4m, vorzugsweise zwischen 1m und 2m lang sind.

In einer weiteren Ausgestaltung der Erfindung ist vorgesehen, dass zwischen 3 und 5, insbesondere 4 Segmente, nebeneinander befestigt sind.

In einer weiteren Ausgestaltung der Erfindung ist vorgesehen, dass das Einlass- und/oder Auslassrohr einen Querschnitt aufweist, der abschnittsweise gerade ausgebildet ist, insbesondere rechteckig ausgebildet ist, wobei vorzugsweise zumindest eine der Lamellen an einem geraden Abschnitt des Einlass- und/oder Auslassrohrs befestigt ist.

An einem Abschnitt, an dem das Einlass- und/oder Auslassrohr keine Krümmung aufweist, lassen sich die Lamellen besonders einfach und fluiddicht befestigen. Insbesondere kann somit besonders gut sichergestellt werden, dass die Hohlräume der Lamellen besonders genau mit Öffnungen in den Einlass- und/oder Auslassrohren zur Deckung gebracht werden.

In einer weiteren vorteilhaften Ausgestaltung der Erfindung ist vorgesehen, dass die Einlassrohre mehrerer Segmente mit einem gemeinsamen Versorgungsrohr verbunden sind und/oder die Auslassrohre mehrerer Segmente mit einem gemeinsamen Ableitungsrohr verbunden sind, wobei
- Versorgungsrohr und Ableitungsrohr auf der gleichen Seite der Segmente angeordnet sind oder
- Versorgungsrohr und Ableitungsrohr auf gegenüberliegenden Seiten der Segmente angeordnet sind.

Wenn Versorgungsrohr und Ableitungsrohr auf gegenüberliegenden Seiten der Segmente angeordnet sind, das Fluid innerhalb eines Segments also beispielsweise oben links zugeführt und unten rechts abgeführt wird, lässt sich eine besonders gleichmäßige Durchströmung der Lamellen mit dem Fluid erzielen.

Nachfolgend wird die Erfindung auch hinsichtlich weiterer Merkmale und Vorteile anhand von Ausführungsbeispielen beschrieben, die anhand der Abbildungen näher erläutert werden.

Hierbei zeigen:
- Fig. 1: eine Querschnittsansicht einer erfindungsgemäßen Lamelle;
- Fig. 2: eine Ansicht eines Längsquerschnitts durch die Lamelle aus Fig. 1;
- Fig. 3: eine Draufsicht auf eine erfindungsgemäße Luftumlenkeinrichtung mit vier Segmenten;
- Fig. 4: eine Querschnittsansicht eines Eckbereichs eines erfindungsgemäßen Freifall-Simulators;
- Fig. 5: eine schematische Darstellung einer typischen Einbausituation einer erfindungsgemäßen Luftumlenkeinrichtung

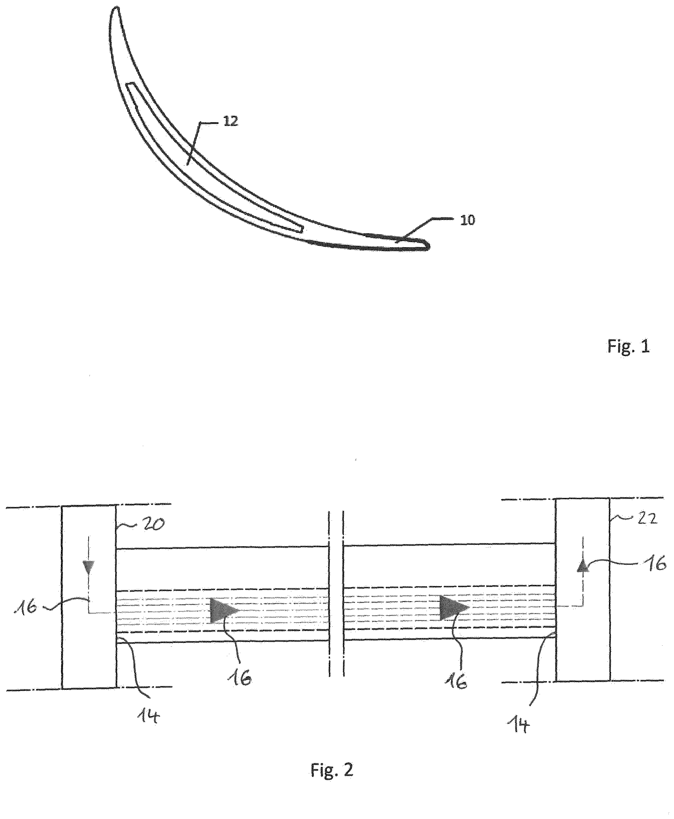

Fig. 1 zeigt den Querschnitt einer Lamelle 10 mit einem Hohlraum 12. Der Hohlraum erstreckt sich über ungefähr ein Drittel der Länge der Lamelle in Luftströmungsrichtung und weist ungefähr dieselbe Krümmung wie die Lamelle auf.

Fig. 2 zeigt einen Längsquerschnitt der Lamelle 10, wobei die Längsquerschnittslinie der Krümmung der Lamelle folgt. Die Lamelle 10 ist links mit einem Einlassrohr 20 und rechts mit einem Auslassrohr 22 verbunden, der Längsquerschnitt in Fig. 2 ebenfalls dargestellt ist. Die Fluidflussrichtung in Einlassrohr 20, Lamelle 10 und Auslassrohr 22 ist dabei durch Pfeile 16 gekennzeichnet.

Die Lamelle 10 ist durch Schweißnähte 14 am Einlassrohr 20 und am Auslassrohr 22 fluiddicht befestigt. Separate Verbindungselemente liegen nicht vor.

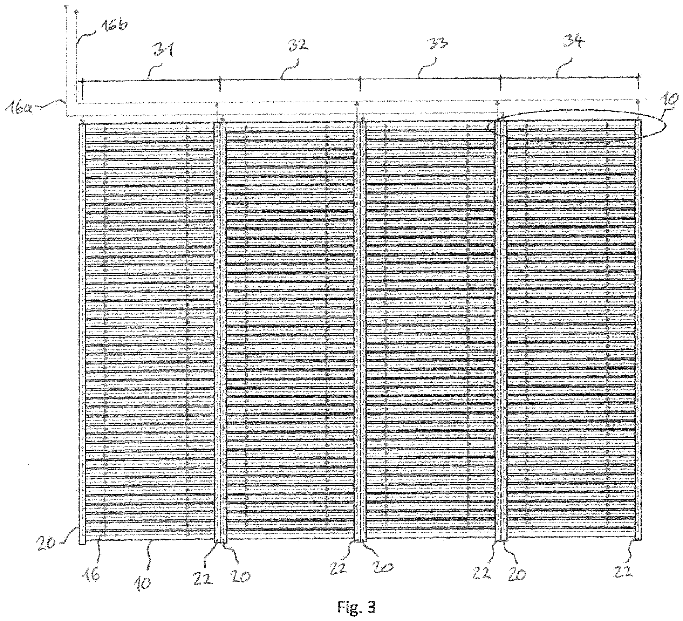

Fig. 3 zeigt eine Draufsicht auf eine erfindungsgemäße Luftumlenkeinrichtung mit Lamellen 10 gemäß Fig. 1 und Fig. 2. Die Luftumlenkeinrichtung 30 weist dabei vier Segmente 31, 32, 33, 34 auf, die jeweils ein Einlassrohr 20, ein Auslassrohr 22 und eine Vielzahl von Lamellen 10 aufweisen. Ein kaltes Fluid wird über ein Versorgungsrohr zugeführt und das durch den Wärmeluftstrom aufgewärmte Fluid durch ein Ableitungsrohr abgeführt. Versorgungsrohr und Ableitungsrohr sind dabei auf derselben Seite der Segmente angeordnet. In Fig. 3 sind Versorgungs- und Ableitungsrohr nicht dargestellt, dafür ist mit gestrichelten Linien und Pfeilen 16a, 16b der Fluidfluss in Versorgungs- und Ableitungsrohr dargestellt.

Bei der in Fig. 3 dargestellten Luftumlenkeinrichtung befinden sich die Lamellen aller Segmente im Wesentlichen in einer Ebene. Es sind aber erfindungsgemäß auch andere Anordnungen denkbar, z.B. können benachbarte Segmente versetzt zueinander angeordnet sein.

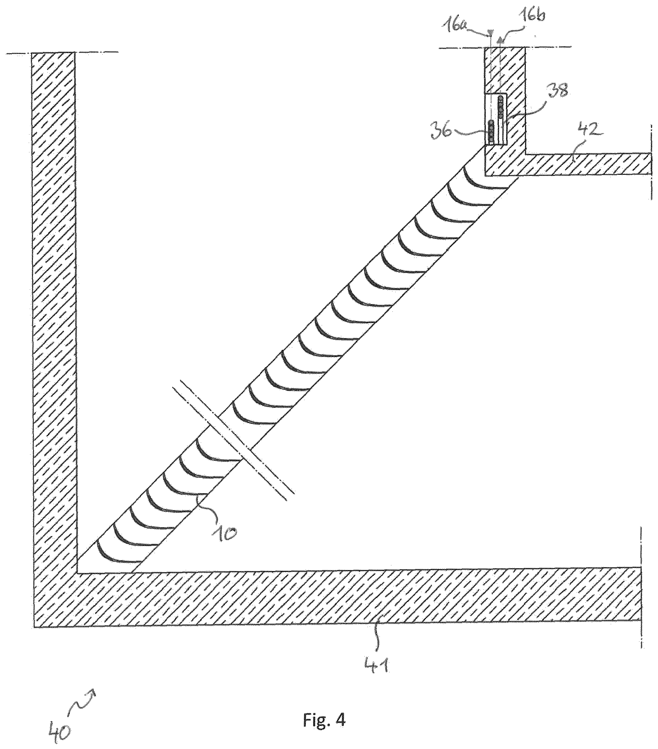

Fig. 4 zeigt einen Längsquerschnitt durch einen Eckbereich 40 eines Luftführungskanals. Dabei ist der Querschnitt einer Vielzahl von Lamellen 10 eines ersten Segments 31 einer erfindungsgemäßen Luftumlenkeinrichtung 30 sichtbar. Der Querschnitt der unteren Wand 41 und der Querschnitt der oberen Wand 42 des Luftführungskanals sind sichtbar. Dabei ist auch ersichtlich, dass in der oberen Wand 42 das Versorgungsrohr 36 und Ableitungsrohr 38 geführt werden. Die Pfeile 16a, 16b kennzeichnen dabei, wie das Fluid durch das Versorgungsrohr 36 zugeführt bzw. durch das Ableitungsrohr 38 abgeführt wird. In bestimmten Ausgestaltungen der Erfindung kann vorgesehen sein, dass dabei für jedes Segment ein eigenes Rohr verlegt ist.

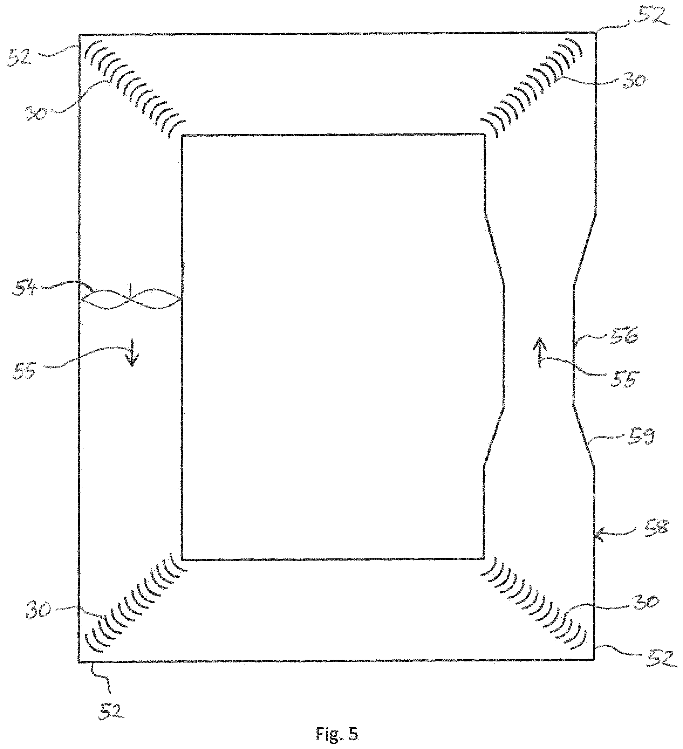

In Fig. 5 ist eine typisch Einbausituation einer erfindungsgemäßen Luftumlenkeinrichtung gezeigt. Der Freifall-Simulator 50 weist dabei Luftumlenkeinrichtungen 30 in jeder der vier Ecken 52 auf. In anderen Ausgestaltungen kann auch vorgesehen sein, dass nur in einer, zwei oder drei Ecken eine Luftumlenkeinrichtung 30 angeordnet ist.

Der Ventilator 54 ist bevorzugtermaßen in einem vertikalen Bereich angeordnet und beschleunigt die Luft nach unten. Die Luftströmungsrichtung ist dabei in Fig. 5 durch die Pfeile 55 angedeutet. Die durch den Ventilator 54 beschleunigte Luft strömt dabei aufwärts durch die Flugkammer 56. Unterhalb der Flugkammer verengt sich der Luftführungskanal 58 in einem Verengungsbereich 59. Hieraus ergibt sich eine Beschleunigung des Luftstroms.

Durch die erfindungsgemäßen Luftumlenkeinrichtungen 30 kommt es zu geringeren Reibungsverlusten in den Eckbereichen und es erfolgt eine Kühlung des Luftstroms. Vorliegend ist der Luftführungskanal 58 eckig ausgestaltet und die Luftumlenkeinrichtungen 30 in den Ecken 52 angeordnet. Es sind erfindungsgemäß aber auch andere Profile des Luftführungskanals 58 und andere Anordnungen der Luftumlenkeinrichtungen 30 denkbar.

### Bezugszeichen:

- 10: Lamelle
- 12: Hohlraum
- 14: Schweißnähte
- 16: Fluidflussrichtung
- 20: Einlassrohr
- 22: Auslassrohr
- 30: Luftumlenkeinrichtung
- 31-34: Vier Segmente
- 36: Versorgungsrohr
- 38: Ableitungsrohr
- 40: Eckbereich
- 41: Untere Wand
- 42: Obere Wand
- 50: Freifall-Simulator
- 52: Ecke
- 54: Ventilator
- 55: Luftströmungsrichtung
- 56: Freifall-Kammer
- 58: Luftführungskanal
- 59: Verengungs-Bereich

## Patentansprüche

1. Luftumlenkeinrichtung ausgebildet und bestimmt zum Einbau in einen Freifallsimulator mit in sich geschlossenem Luftkreislauf, mit der ein Luftstrom um einen Winkel von 60° bis 120°, vorzugsweise um etwa 90°, umgelenkt wird, wobei die Luftumlenkeinrichtung mehrere Segmente (31 bis 34) umfasst, wobei ein Segment umfasst:
- eine Vielzahl von ein Umlenkprofil zur Umlenkung des Luftstroms ausbildenden Lamellen (10) mit zumindest einem Hohlraum (12) zur Durchleitung eines Fluids,
- ein für alle Lamellen (10) des Segments (31 bis 34) gemeinsames Einlassrohr (20) zum Zuführen des Fluids in die Lamellen (10) und
- ein für alle Lamellen (10) des Segments (31 bis 34) gemeinsames Auslassrohr (22) zum Abführen des Fluids aus den Lamellen (10),
wobei die Segmente (31 bis 34) in Richtung der Fluiddurchleitung nebeneinander befestigt sind derart, dass die Segmente (31 bis 34) in Parallelanordnung zueinander von Fluid durchströmbar sind.

2. Luftumlenkeinrichtung nach Anspruch 1,
**dadurch gekennzeichnet, dass** die Lamellen (10) zumindest eines Segments (31 bis 34) an dem Einlassrohr (20) und/oder dem Auslassrohr (22) stoffschlüssig, insbesondere durch Verschweißen, vorzugsweise durch Laser-Verschweißen, befestigt sind.

3. Luftumlenkeinrichtung nach einem der vorherigen Ansprüche,
**dadurch gekennzeichnet, dass** zumindest eine der Lamellen (10) in Richtung der Luftströmungsrichtung gekrümmt ausgebildet ist, wobei insbesondere auch der Hohlraum (12) der Lamelle (10) in diese Richtung gekrümmt ausgebildet ist.

4. Luftumlenkeinrichtung nach einem der vorherigen Ansprüche, **dadurch gekennzeichnet, dass** zumindest eine der Lamellen (10) aus Aluminium, insbesondere aus einem Aluminiumstrangpressprofil gefertigt ist.

5. Luftumlenkeinrichtung nach einem der vorherigen Ansprüche, **dadurch gekennzeichnet, dass** die Lamellen (10) zumindest eines der Segmente (31 bis 34) zwischen 0,5m und 4m, vorzugsweise zwischen 1m und 2m lang sind.

6. Luftumlenkeinrichtung nach einem der vorherigen Ansprüche, **dadurch gekennzeichnet, dass** zwischen drei und fünf, insbesondere vier Segmente (31 bis 34) nebeneinander befestigt sind.

7. Luftumlenkeinrichtung nach einem der vorherigen Ansprüche, **dadurch gekennzeichnet, dass** das Einlass- (20) und/oder Auslassrohr (22) einen Querschnitt aufweist, der abschnittsweise gerade ausgebildet ist, insbesondere rechteckig ausgebildet ist, wobei vorzugsweise zumindest eine der Lamellen (10) an einem geraden Abschnitt des Einlass- (20) und/oder Auslassrohrs (22) befestigt ist.

8. Luftumlenkeinrichtung nach einem der vorherigen Ansprüche, **dadurch gekennzeichnet, dass** die Einlassrohre (20) mehrerer Segmente (31 bis 34) mit einem Versorgungsrohr (36) verbunden sind und/oder die Auslassrohre (22) mehrerer Segmente (31 bis 34) mit einem Ableitungsrohr (38) verbunden sind, wobei
- Versorgungsrohr (36) und Ableitungsrohr (38) auf der gleichen Seite der Segmente angeordnet sind oder
- Versorgungsrohr (36) und Ableitungsrohr (38) auf gegenüberliegenden Seiten der Segmente (31 bis 34) angeordnet sind.

9. Freifallsimulator mit in sich geschlossenem Luftkreislauf, umfassend
- eine Schwebekammer (36), in welcher Personen infolge eines vertikal aufwärts gerichteten Luftstromes schweben können,
- einen im Wesentlichen geschlossenen Luftführungskanal (58) mit mindestens einem Gebläse (54),
- eine im Luftführungskanal, insbesondere in einer Ecke des Luftführungskanals angeordnete Luftumlenkeinrichtung gemäß einem der Ansprüche 1 bis 8.

## Claims

1. An air deflecting device configured and intended for being installed in a freefall simulator having a self-contained air circulation, by means of which an air flow is deflected by an angle of 60° to 120°, preferably by about 90°, wherein the air deflecting device comprises a plurality of segments (31 to 34), wherein a segment comprises:
- a multitude of slats (10) forming a deflecting profile for deflecting the air flow, having at least one hollow space (12) for conveying a fluid,
- an inlet tube (20) common to all of the slats (10) of the segment (31 to 34) for feeding the fluid into the slats (10), and
- an outlet tube (22) common to all of the slats (10) of the segment (31 to 34) for discharging the fluid from the slats (10),
wherein the segments (31 to 34) are attached side by side in the direction of the fluid conveyance such that fluid can flow through the segments (31 to 34) in a mutually parallel arrangement.

2. The air deflecting device according to claim 1,
**characterized in that** the slats (10) of at least one segment (31 to 34) are attached to the inlet tube (20) and/or the outlet tube (22) by a material bond, in particular by welding, preferably by laser welding.

3. The air deflecting device according to anyone of the preceding claims,
**characterized in that** at least one of the slats (10) is formed to be curved in the direction of the air flow direction, wherein in particular, the hollow space (12) of the slat (10) as well is formed to be curved in said direction.

4. The air deflecting device according to anyone of the preceding claims,
**characterized in that** at least one of the slats (10) is fabricated from aluminum, in particular from an extruded aluminum section.

5. The air deflecting device according to anyone of the preceding claims,
**characterized in that** the slats (10) of at least one of the segments (31 to 34) has a length of between 0.5 m and 4 m, preferably of between 1 m and 2 m.

6. The air deflecting device according to anyone of the preceding claims,
**characterized in that** between three and five, in particular four segments (31 to 34) are attached side by side.

7. The air deflecting device according to anyone of the preceding claims,
**characterized in that** the inlet tube (20) and/or outlet tube (22) have a cross-section which is formed to be straight, in particular rectangular, at least in portions, wherein preferably at least one of the slats (10) is attached to a straight portion of the inlet tube (20) and/or outlet tube (22).

8. The air deflecting device according to anyone of the preceding claims,
**characterized in that** the inlet tubes (20) of several segments (31 to 34) are connected to a supply tube (36) and/or the outlet tubes (22) of several segments (31 to 34) are connected to a discharge tube (38), wherein
- supply tube (36) and discharge tube (38) are disposed on the same side of the segments, or
- supply tube (36) and discharge tube (38) are disposed on opposite sides of the segments (31 to 34).

9. A freefall simulator having a self-contained air circulation, comprising
- a floating chamber (36), inside of which humans can float due to an airflow being directed vertically upward,
- a substantially closed air guiding duct (58) with at least one fan (54),
- an air deflecting device according to anyone of claims 1 to 8 being disposed within the air guiding duct, in particular in a corner of the air guiding duct.

## Revendications

1. Dispositif déflecteur d'air constitué et destiné à être monté dans un simulateur de chute libre à circuit d'air en boucle fermée, avec lequel un flux d'air est dévié d'un angle de 60° à 120°, de préférence d'environ 90°, sachant que le dispositif déflecteur d'air comprend plusieurs segments (31 à 34), sachant qu'un segment comprend :
- une pluralité de lamelles (10) constituant un profilé déflecteur pour la déviation du flux d'air, avec au moins une cavité (12) pour l'acheminement d'un fluide,
- un tube d'entrée (20) commun pour toutes les lamelles (10) du segment (31 à 34) pour l'amenée du fluide dans les lamelles (10) et
- un tube de sortie (22) commun pour toutes les lamelles (10) du segment (31 à 34) pour l'évacuation du fluide hors des lamelles (10),
sachant que les segments (31 à 34) sont fixés les uns à côté des autres en direction de l'acheminement de fluide de telle façon que les segments (31 à 34) puissent être traversés par du fluide en agencement parallèle les uns aux autres.

2. Dispositif déflecteur d'air selon la revendication 1,
**caractérisé en ce que** les lamelles (10) d'au moins un segment (31 à 34) sont fixées au tube d'entrée (20) et/ou au tube de sortie (22) par liaison de matière, en particulier par soudage, de préférence par soudage laser.

3. Dispositif déflecteur d'air selon l'une des revendications précédentes,
**caractérisé en ce qu'**au moins une des lamelles (10) est constituée de façon courbée en direction de l'écoulement d'air, sachant qu'en particulier la cavité (12) des lamelles (10) est aussi constituée de façon courbée dans cette direction.

4. Dispositif déflecteur d'air selon l'une des revendications précédentes,
**caractérisé en ce qu'**au moins une des lamelles (10) est fabriquée en aluminium, en particulier à partir d'un profilé d'aluminium extrudé.

5. Dispositif déflecteur d'air selon l'une des revendications précédentes,
**caractérisé en ce que** les lamelles (10) d'au moins un des segments (31 à 34) ont une longueur comprise entre 0,5 m et 4 m, de préférence entre 1 m et 2 m.

6. Dispositif déflecteur d'air selon l'une des revendications précédentes,
**caractérisé en ce qu'**entre trois et cinq, en particulier quatre segments (31 à 34) sont fixés les uns à côté des autres.

7. Dispositif déflecteur d'air selon l'une des revendications précédentes,
**caractérisé en ce que** le tube d'entrée (20) et/ou de sortie (22) présente une section transversale qui est constituée par section de façon droite, en particulier de façon rectangulaire, sachant que de préférence au moins une des lamelles (10) est fixée à une section droite du tube d'entrée (20) et/ou de sortie (22).

8. Dispositif déflecteur d'air selon l'une des revendications précédentes,
**caractérisé en ce que** les tube d'entrée (20) de plusieurs segments (31 à 34) sont reliés à un tube d'alimentation (36) et/ou les tubes de sortie (22) de plusieurs segments (31 à 34) sont reliés à un tube d'évacuation (38), sachant que
- le tube d'alimentation (36) et le tube d'évacuation (38) sont disposés du même côté des segments ou
- le tube d'alimentation (36) et le tube d'évacuation (38) sont disposés de côtés opposés des segments (31 à 34).

9. Simulateur de chute libre à circuit d'air en boucle fermée, comprenant
- une chambre de flottement (36) dans laquelle des personnes peuvent flotter suite à un flux d'air dirigé verticalement vers le haut,
- un canal de guidage d'air (58) sensiblement fermé avec au moins une soufflante (54),
- un dispositif déflecteur d'air selon l'une des revendications 1 à 8 disposé dans le canal de guidage d'air, en particulier dans un coin du canal de guidage d'air.
